# EUROPEAN PATENT SPECIFICATION

(11) **EP 1 437 254 B1**
(45) Date of publication and mention of the grant of the patent: **08.07.2009**
(21) Application number: 03100024.3
(22) Date of filing: 09.01.2003
(51) Int. Cl.: B60W 30/16, B60T 7/22

(54) **An adaptive cruise control system for a motor vehicle**
Abstandsbezogenes Fahrgeschwindigkeitsregelsystem
Régulateur de vitesse avec régulation de la distance entre deux véhicules

(43) Date of publication of application: 14.07.2004
(73) Proprietor: Ford Global Technologies, Inc., Dearborn, MI 48126 (US)
(72) Inventor: Engelman, Gerald H., Plymouth, MI 48170 (US); Tellis, Levasseur, Southfield, MI 48076 (US); Joyce, John Patrick, Grosse Pointe Park,MI 48230 (US)
(74) Representative: Messulam, Alec Moses

(56) References cited:
- EP-A- 1 065 090
- EP-A- 1 070 624
- EP-A- 1 193 106
- DE-A- 19 952 892
- DE-A- 19 958 520
- US-A- 5 805 103
- US-A1- 2002 179 355
- PATENT ABSTRACTS OF JAPAN vol. 011, no. 098 (M-575), 27 March 1987 (1987-03-27) & JP 61 247526 A (MITSUBISHI ELECTRIC CORP), 4 November 1986 (1986-11-04)

## Description

The present invention relates generally to vehicle adaptive cruise control systems and more particularly to a method and apparatus for adjusting vehicle speed and maintaining a headway distance in response to a target.

Adaptive Cruise Control (ACC) has reached a level of technical and business readiness such that it is beginning to appear in the consumer market as a comfort and convenience system. Consumer technical enthusiasm for ACC has increased because of their interest in intelligent vehicles and systems such as collision warning and collision avoidance. ACC performs as an enhancement to traditional cruise control by automatically adjusting a set speed, which is set by the vehicle operator, to allow a vehicle to adapt to moving traffic.

Under normal driving conditions the ACC system is engaged with a set speed equal to a maximum autonomous speed that is desired by the operator and the ACC system operates in a conventional cruise control mode. When the vehicle approaches traffic, the ACC system automatically adjusts the set speed to follow the traffic at a desired headway distance. When the traffic clears, the ACC system slowly resumes the speed of the vehicle to the set speed. When the ACC vehicle performs a lane change, and the actual distance to a new target is less than the set headway distance, the ACC vehicle will remain in follow mode.

When the vehicle approaches slow traffic where the ACC system determines to reduce speed of the vehicle below a minimum speed for ACC operation, the ACC system is automatically disengaged and the operator manually follows slower vehicles in the slow traffic. When the slow traffic is no longer in front of the vehicle the operator must manually accelerate the vehicle to a velocity above the minimum speed for ACC operation, approximately 40 KPH, before the ACC system is able to resume acceleration to the set speed by depression of a resume button.

During slower stop and go traffic the operator frequently adjusts the speed of the vehicle by applying the brakes or depressing the accelerator. The continuous adjusting of the vehicle speed can become frustrating for the operator over extended periods of time.

Traditional ACC systems were designed to only react to moving targets presented by normal traffic under extended cruise control operation and when the vehicle is traveling at velocities above 40KPH. Therefore, by operating only when certain conditions exist, the ACC system is compromising the goals of a collision warning or avoidance system.

US5805103, which is taken as the closest prior art, discloses a system for determining whether a vehicle ahead is decelerating and EP1070624 discloses a system for maintaining a predetermined distance between vehicles when an ABS operation is active.

It would therefore be desirable to develop an ACC system that operates at vehicle speeds below 40KPH. It would also be desirable for the ACC system to correctly classify targets when travelling at the slower speeds. The ability to operate and classify targets at slower speeds may increase the success of ACC systems in the consumer market and also increase the collision warning capabilities of a vehicle.

It is an object of this invention to provide an improved cruise control system for a motor vehicle.

According to a first aspect of the invention there is provided an adaptive cruise control system for a host vehicle **characterised in that** the system comprises a forward-looking sensor generating a range signal corresponding to a distance between the host vehicle and a target, the forward-looking sensor generating a range rate signal corresponding to a rate that the distance between the host vehicle and the target is changing and a controller electrically coupled to the forward-looking sensor and acquiring the target wherein the controller includes control logic operative to maintain a preset headway distance between the host vehicle and the target by adjusting the host vehicle velocity in response to the range signal and the range rate signal, stopping the host vehicle when the target stops and the target was acquired below a predetermined host vehicle velocity, and activating a warning when the target stops and the target was acquired above the predetermined host vehicle velocity.

The controller may be operable to provide a control signal to at least one of a braking system and an engine management system to maintain the preset headway distance.

The controller may be operable to maintain the headway distance from an initial vehicle rest velocity of zero KPH.

The system may further comprise an electric park brake assist and the controller is operable to apply the electric park brake assist while maintaining a headway distance between the host vehicle and the target.

The target comprises at least one of a vehicle, an object, and a pedestrian.

The system may further comprise an indicator electrically coupled to the controller operable to indicate at least one of an indication that the controller is maintaining a vehicle velocity of zero KPH, an indication that the controller is stopping the host vehicle and an indication that the rate of deceleration is insufficient to stop behind the target.

The controller may maintain the host vehicle at a rest velocity of zero KPH for a predetermined duration of time.

The controller may maintain the host vehicle at a rest velocity of zero KPH until intervention is provided.

The system may further comprise the forward-looking sensor generating a target angle signal wherein the controller maintains a headway distance in response to the target angle signal.

The system may further comprise the forward-looking sensor generating a yaw rate signal wherein the controller maintains a headway distance in response to the yaw rate signal.

According to a second aspect of the invention there is provided a method of adjusting the velocity of a host vehicle **characterised in that** the method comprises sensing a target and generating a range signal corresponding to a distance between the host vehicle and the target, generating a range rate signal corresponding to a rate the distance between the host vehicle and the target is changing, maintaining a preset headway distance between the host vehicle and the target, in response to the range signal and the range rate signal, stopping the host vehicle when the target stops and the target was acquired below a predetermined host vehicle velocity and activating a warning when the target stops and the target was acquired above the predetermined host vehicle velocity.

The target comprises at least one of a vehicle, an object, and a pedestrian.

The method may further comprise maintaining a headway distance between the host vehicle and the target, from an initial vehicle rest velocity of zero KPH, in response to the range signal and the range rate signal.

The method may further comprise stopping the host vehicle when the target stops and the target did not exceed a predetermined velocity.

The method may further comprise activating a warning when the target stops and the target exceeded the predetermined velocity.

According to a third aspect of the invention there is provided a motor vehicle having an adaptive cruise control system in accordance with said first aspect of the invention.

The invention will now be described by way of example with reference to the accompanying drawing of which:-
Figure 1 is a block diagram view of a stop and go adaptive cruise control (ACC) system in accordance with an embodiment of the present invention;
Figure 2 is a pictorial view of a host vehicle using the stop and go ACC system in a congested traffic situation in accordance with an embodiment of the present invention;
Figure 3 is a pictorial view of a host vehicle using the stop and go ACC system while adjusting lanes to avoid a stopped vehicle in accordance with an embodiment of the present invention;
Figure 4 is a pictorial view of a host vehicle using the stop and go ACC system, while following a target vehicle making a right turn from a complete stop, in accordance with an embodiment of the present invention;
Figure 5 is a pictorial view of a host vehicle using the stop and go ACC system, while following a target vehicle making a left turn from a complete stop, in accordance with an embodiment of the present invention;
Figure 6 is a pictorial view of a host vehicle using the stop and go ACC system and encountering merging traffic from an entrance ramp, in accordance with an embodiment of the present invention;
Figure 7 is a pictorial view of a host vehicle using the stop and go ACC system, while changing lanes in stop and go traffic, in accordance with an embodiment of the present invention;
Figure 8 is a pictorial view of a host vehicle using the stop and go ACC system and encountering a "cut-in" vehicle, in accordance with an embodiment of the present invention;
Figure 9 is a pictorial view of a host vehicle using the stop and go ACC system and encountering an oncoming vehicle, in accordance with an embodiment of the present invention;
Figure 10 is a pictorial view of a host vehicle using the stop and go ACC system and encountering an object, in accordance with an embodiment of the present invention;
Figure 11 is flow chart illustrating a method of maintaining a preset headway distance between the host vehicle and a target in accordance with an embodiment of the present invention; and
Figure 12 is a sample state transition diagram illustrating the operation of the stop and go ACC system in accordance with an embodiment of the present invention.

In each of the following figures, the same reference numerals are used to refer to the same components. While the present invention is described with respect to a method and apparatus for adjusting vehicle speed and maintaining a headway distance in response to a target, the present invention may be adapted to be used in various systems including: cruise control systems, forward collision warning systems, collision avoidance systems, vehicle systems, or other systems that may require adaptive speed control. In the following description, various operating parameters and components are described for one constructed embodiment, these specific parameters and components are included as examples and are not meant to be limiting.

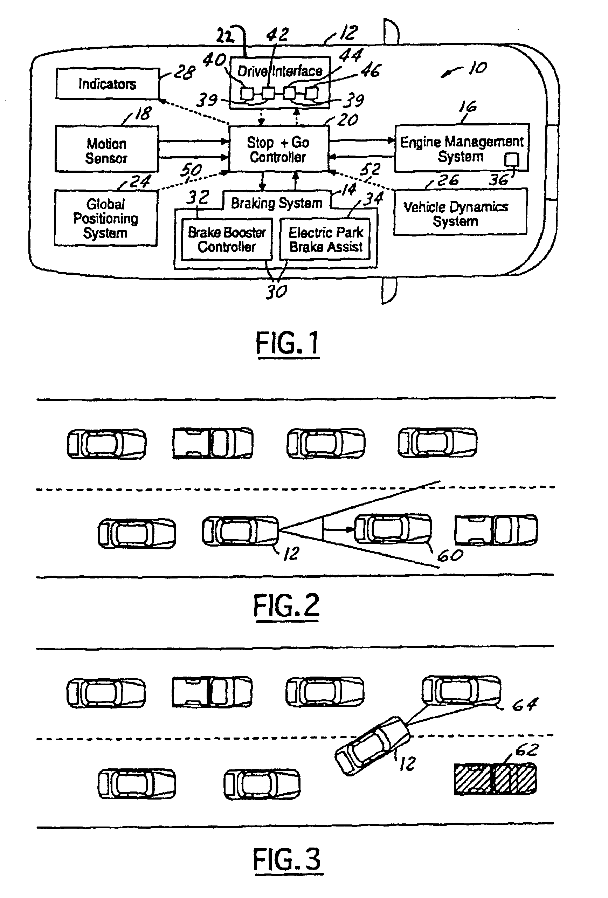

Referring now to Figure 1, a block diagrammatic view of a stop and go adaptive cruise control (ACC) system 10 in accordance with an embodiment of the present invention is shown. The system 10 is located within a host vehicle 12 that has a braking system 14 and an engine management system 16. System 10 includes a forward-looking sensor 18 for sensing a target in the path of the host vehicle 12.

The forward-looking sensor 18 generates a range signal corresponding to a distance between the host vehicle 12 and a target and a range rate signal corresponding to a rate said distance between the host vehicle 12 and said target is changing.

A stop and go controller 20 receives the rate signal and the range rate signal and determines whether to signal the braking system 14 or to signal the engine management system 16 as to maintain a preset distance between the host vehicle 12 and the target. The controller 20 maintains the preset distance for host vehicle velocities from zero to 50KPH. The system 10 may also include other components such as a driver interface 22, a global positioning system 24, a vehicles dynamics system 26, various indicators 28, and other components as will become more evident from the following description.

The braking system 14 may include any vehicle system known in the art that is capable of reducing the velocity of the host vehicle 12. Although, the braking system 14 of the present invention comprises two devices 30 for reducing the velocity of the host vehicle 12, other similar systems may be used. For example a transmission controller (not shown) that is capable of downshifting a transmission of the host vehicle 12 may be used to reduce the host vehicle velocity.

The braking system 14 of the present invention includes a brake booster controller 32 and an electric park brake assist 34. The brake booster controller 32 is equivalent to a vehicle operator applying the brakes. The electric park brake assist 34 is used when additional braking power is requested by the controller 20. The electric park brake assist may be used as a fail-safe mechanism when a failure occurs within the booster (not shown) of the braking system 14.

The engine management system 16 may include any host vehicle components that adjust the acceleration of the vehicle. These components may include a vehicle accelerator 36 such as in the present invention, a fuel and air intake control system, an engine timing controller, or other vehicle component or system known in the art that may be used to adjust the velocity of the host vehicle 12.

Forward-looking sensor 18 may be of various type known in the art including a radar sensor, a lidar sensor, a combination of a radar sensor and a camera system or other forward-looking sensor. Although, the forward-looking sensor 18 of the present invention is a single frontal mounted sensor, multiple forward-looking sensors mounted at various locations on the host vehicle 12 may be used. The forward-looking sensors may be front mounted, side mounted or even rear mounted. The purpose of the forward-looking sensor 18 is to sense position and velocity of a target located in a future path of the host vehicle 12 and relative to the host vehicle 12.

The target may be any of the following: a vehicle, a stopped object, a moving object, a bridge, construction equipment, a sign, an animate or inanimate object, or other object. The forward-looking sensor 18 may also gather other information including target angel relative to the host vehicle 12 and yaw rate of the target relative to the host vehicle 12. The additional information allows the controller 20 to more accurately determine the threat of the target as to the host vehicle 12 and the appropriate actions to perform.

Controller 20 may be a microprocessor based controller such as a computer having a central processing unit, memory (RAM and/or ROM), and associated input and output buses. Controller 20 may be a portion of a main control unit, such as a main vehicle controller, or may be a stand-alone controller.

The controller 20 of the present invention contains logic for maintaining a preset distance between a target and the host vehicle 12 while operating at a low host vehicle velocity and a midrange host vehicle velocity. The low host vehicle velocity includes approximately any velocity below 40KPH, including an at rest velocity of 0KPH. The midrange host vehicle velocity includes approximately velocities greater than or equal to 40KPH and less than 50KPH. The controller 20 allows an operator to activate the system 10 at any velocity below 50KPH.

The controller 20, while activated, maintains a preset distance between the host vehicle 12 and the target. The preset distance is maintained when the host vehicle velocity is from 0KPH up to 50KPH, from 50KPH down to 0KPH, and any other scenario. The controller 20 automatically disengages for host vehicle velocities above 50KPH at which point traditional ACC systems may take over. The preset distance may be set by an operator or may be set during production of the system 10.

The controller 20 may have an initialization hold time, during which the controller 20 holds the host vehicle 12 stationary until an operator reactivates system 10 to resume operation by pressing on the accelerator 36, pressing on a brake pedal (not shown) within the vehicle 12, switching the reengage switch 44, or by another reactivation method known in the art. The controller 20 may also hold the host vehicle 12 stationary for a predetermined amount of time after the system 10 reduces the velocity of the host vehicle 12 to a complete stop. The controller 20 reactivates the system 10 after the predetermined time has lapsed or waits until the operator re-initializes or deactivates the system 10.

An embodiment of the present invention includes the driver interface 22 which may have several different switches 39 including a "ON" switch 40, a "Follow" switch 42, a "Reengage" switch 44, or a "Headway" adjustment switch 46.

The switches 39 allow the operator to activate, deactivate, resume operation, and adjust the distance between the host vehicle 12 and a target. The functions that switches 39 perform may be included and automatically implemented through logic within the controller 20. The headway adjustment switch 46 may have several settings for example it may have a short, a medium, or a long setting representing different desired set distances that may be maintained between the host vehicle 12 and a target. The switches 39 may be of various type and style as known in the art.

The global positioning system 24 may be incorporated in conjunction with the forward-looking sensor 18 as to detect environment situations, such as an exit ramp, a round-a-bout, or other environmental situations. This is represented by dashed arrow 50.

The vehicle dynamics system 26 is provided in another embodiment of the present invention, as represented by the dashed arrow 52. The vehicle dynamics system 26 uses vehicle sensors (not shown) to measure inertial information of the host vehicle 12. When instability of the host vehicle 12 occurs, the vehicle dynamics system 26 may deactivate the system 10. By deactivating system 10, a false reaction by the controller 10 may be prevented.

The system 10 may also include various indicators 28 such as an indicator to inform an operator that the system 10 is holding the host vehicle 12 stationary, that acceleration of the host vehicle 12 is being controlled, or that the controller 20 is stopping the host vehicle 12. An audible or visual indicator may be provided as to warn the operator that the braking performed by the controller 20 is insufficient to slow down the host vehicle 12 and that the operator should intervene.

Referring now to Figures 2-10, various possible situations are illustrated that may occur during use of the system 10. Each of these situations may have different logic associated with and stored in the controller 20, so as to perform differently as needed.

In Figure 2, the host vehicle 12 is using the system 10 in a congested traffic situation. The system 10 maintains a preset distance between the host vehicle 12 and a target vehicle 60.

In Figure 3, the host vehicle 12 is using the system 10 while changing lanes to avoid a stopped vehicle 62. The system 10 detects a vehicle 64 in the future path of the host vehicle 12 and as in Figure 2 maintains a preset distance between the host vehicle 12 and the detected vehicle 64.

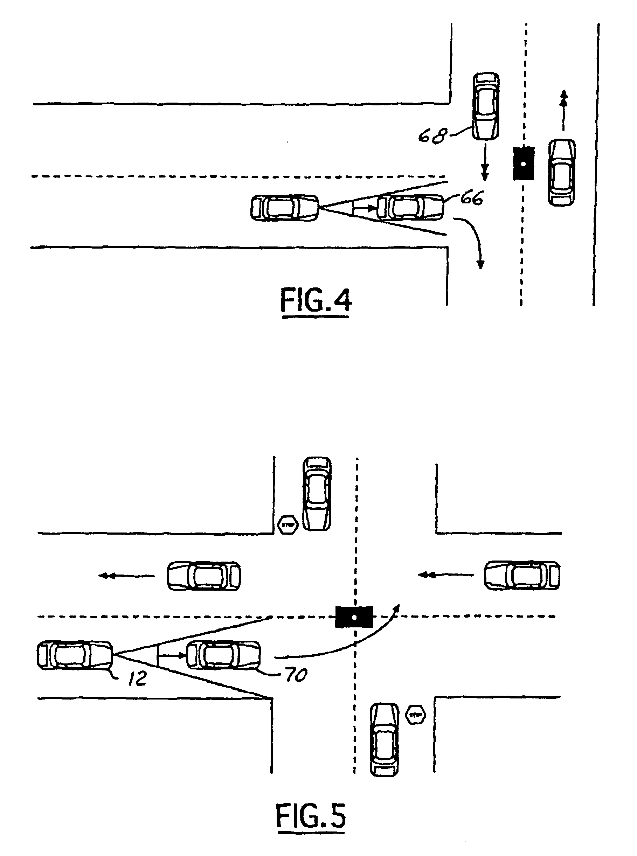

In Figure 4, the host vehicle 12 is using the system 10 while following a target vehicle 66 making a right turn from a complete stop. In this situation the system 10 may perform several different actions. The system 10 may hold the host vehicle 12 stationary until intervention by an operator, the system 10 may detect an oncoming vehicle 68 and also hold the host vehicle 12 stationary until the oncoming vehicle 68 passes, or the system 10 may determine that the oncoming vehicle 68 is at a safe distance and allow the host vehicle 12 to continue following the target vehicle 66. Actions are determined in response to detected vehicle positioning and travelling velocities relative to the host vehicle 12.

In Figure 5, the host vehicle 12 is using the system 10 while following a target vehicle 70 making a left turn from a complete stop. As with the situation in Figure 4 the system 10 may perform several actions. Also as with Figure 4 the system 10 will determine vehicle positioning using various detection devices described above as to determine what action to perform. Note when the system 10 encounters a situation that it is not familiar with or is unable to determine what action to perform it may indicate this to the operator and wait for operator intervention.

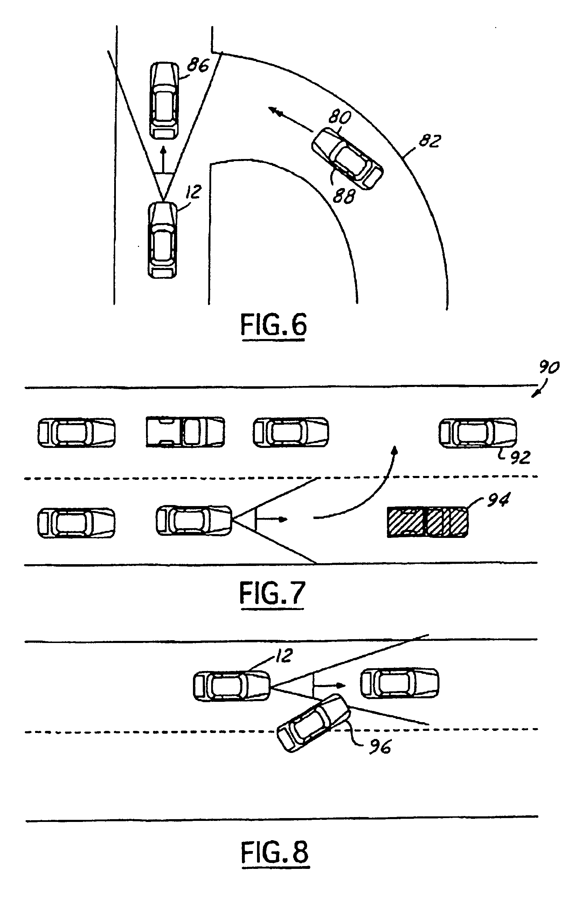

In Figure 6, the host vehicle 12 is using the system 10 and encountering merging traffic 80 from an entrance ramp 82. Rather than continuing to follow a target vehicle 86 at a preset distance the system 10 may reduce the velocity of the host vehicle 12 as to now follow a new target vehicle 88. Of course, for any of the described situation in this application the controller 20 may be programmed to wait for operator intervention before continuing to act.

In Figure 7, the host vehicle 12 is using the system 10 while changing lanes in stop and go traffic 90. As in other described situations the system 10 may determine to follow a new target vehicle 92 instead of following the original target vehicle 94.

In Figure 8, the host vehicle 12 is using the system 10 and encountering a "cut-in" vehicle 96. Similar to that of Figure 6 the system 1.0 may determine to reduce the velocity of the host vehicle 12 as to let the cut-in vehicle 96 in front of the host vehicle 12 and then resume following the cut-in vehicle 96 at a preset distance.

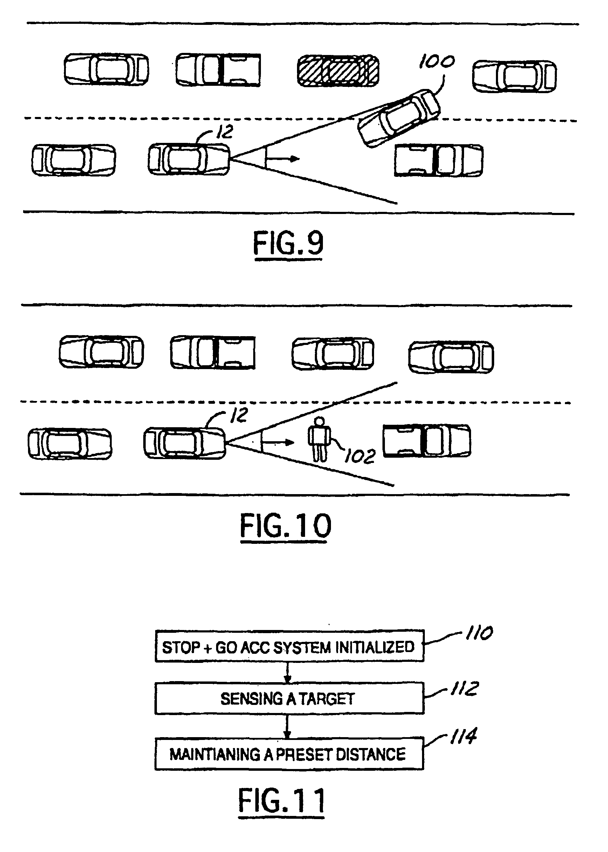

In Figure 9, the host vehicle 12 is using the system 10 and encountering an oncoming vehicle 100. In this situation the system 10 may indicate to the operator to intervene and may also reduce the velocity of the host vehicle 12 to zero KPH as to prevent a collision with the oncoming vehicle 100.

In Figure 10, the host vehicle 12 is using the system 10 and encountering a pedestrian 102 or some other object other than another vehicle. The system 10 may determine to reduce the velocity of the host vehicle 12 to 0KPH as to prevent colliding with the object 102.

Of course, the above-described situations are not all encompassing and the controller 20 may be programmed to act for other situations.

Referring now to Figure 11, a flow chart illustrating a method of maintaining a preset headway distance between the host vehicle 12 and a target, while travelling at a low or midrange host vehicle velocity of less than 50KPH, in accordance with an embodiment of the present invention is shown.

In step 110, the system 10 is initialized as described above. The system 10 is activated and determines the relative positioning and relative velocities of objects surrounding the host vehicle 12. In doing so the system determines the appropriate action to perform.

In step 112, the system 10 senses a target using a detection device such as the forward-looking sensor 18. A range signal and a range rate signal are generated corresponding to the distance between the host vehicle 10 and the target and the rate of change of this distance, respectively.

In step 114, the system 10 maintains a preset distance between the host vehicle 12 and the target. This may occur in a couple of different situations: either the host vehicle 12 is stationary and the system determines to begin accelerating and following the target or the host vehicle 12 is already travelling at a certain velocity and adjusts the host vehicle velocity as to maintain the set distance.

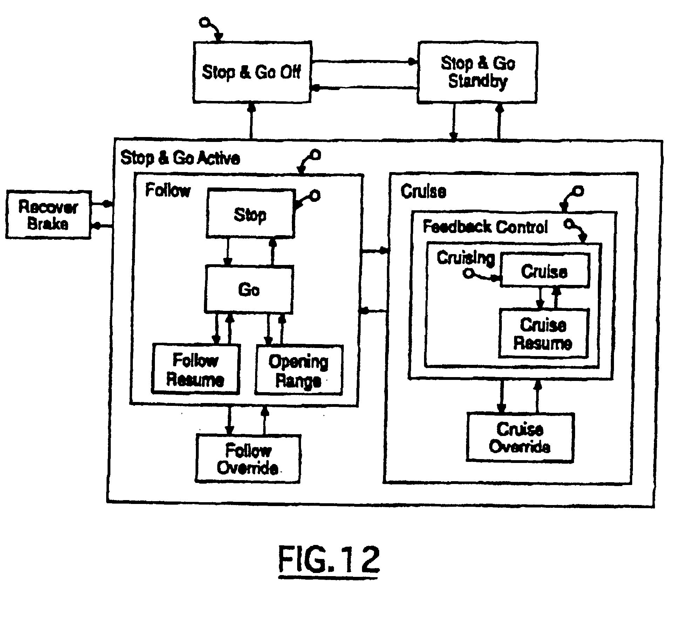

Referring now to Figure 12, a sample state transition diagram illustrating the operation of the system 10 according to an embodiment of the present invention is shown.

In state Stop and Go Off, the system 10 is deactivated. The system 10 may be sensing objects in a close proximity to the host vehicle 12 as to warn the operator.

In state Stop and Go Standby, the system 10 is in a standby mode. Upon receiving a power on command the system 10 initializes as described above and sits idle until further commanded.

In state Stop and Go Active, the system 10 is activated as to follow and maintain a preset distance between the host vehicle 12 and a target. The system 10 may act as a traditional cruise control system, illustrated by a Cruise state and corresponding sub states, as known in the art, or may perform otherwise depending upon the detection of objects in the close proximity of the host vehicle. The system 10 may resort back to the stop and go off state or the stop and go standby state for various reasons as described above.

In state Follow, a target has been detected and the system maintains the preset distance. The preset distance is maintained by four different states, a Stop state, a Go state, a Follow Resume state, and an Opening Range state. The controller 20 monitors the distance between the host vehicle and the target vehicle as well as the relative range rate to determine an appropriate resolved host vehicle velocity. The resolved host vehicle velocity represents a safe host vehicle travelling velocity to maintain the preset distance.

During the Stop state the host vehicle velocity is greater then the target velocity or the distance between them is less than the preset distance. The system 10 reduces the velocity of the host vehicle 12 by signalling the braking system 14.

During the Go state, the difference between the host vehicle velocity and the resolved host vehicle velocity is less than a predetermined value, or the range rate is less than or equal to a predetermined value and the difference in velocity is greater than or equal to zero. The system 10 is signalling the engine management system 16 to not signal the braking system 14. Typically in this state, the host vehicle velocity is approximately equal to the target velocity.

During the Follow Resume state, the difference between the host vehicle velocity and the host vehicle's target velocity is greater than or equal to a predetermined value the system 10 resumes following the target by accelerating or decelerating the vehicle. When the difference between the host vehicle velocity and the host vehicle target velocity is less than the predetermined value, then the system 10 returns to the green state.

During the Opening Range state, the range rate between the host vehicle 12 and the target is greater than a predetermined value and the velocity difference between the host vehicle 12 and the target is less than zero. The system 10 reduces the amount that it is accelerating the host vehicle 12 as to prevent a collision. When the range rate is less than the predetermined value the system 10 returns to the green state.

The Stop and Go Active state also includes a Follow Override state. The Follow Override state is performed when either the operator intervenes, a justified malfunction occurs in a host vehicle system, the braking system is insufficiently reducing the velocity of the host vehicle 12, or for other various reasons that may be envisioned by one skilled in the art.

A Recover Brake state is also provided when a problem exists in the braking system 14. The system 10 indicates to the operator that the system 10 is not able to decelerate the host vehicle 12 because of insufficient braking in the braking system 14. The system 10 may apply an emergency brake, such as the electric park brake assist 34, or decelerate the host vehicle 12 using other methods as described above.

The present invention provides an ACC system that is operable for all host vehicle velocities less than 50KPH. The present invention also reduces the amount of tedious actions that an operator has to perform in stop and go traffic. The aforementioned reviews how the present invention increases collision-warning capabilities of a host vehicle.

The above-described apparatus, to one skilled in the art, is capable of being adapted for various purposes and is not limited to cruise control systems, forward collision warning systems, collision avoidance systems, vehicle systems but is equally applicable to other systems that may require adaptive speed control.

## Claims

1. An adaptive cruise control system (10) for a host vehicle (12) **characterised in that** the system (10) comprises a forward-looking sensor (18) generating a range signal corresponding to a distance between the host vehicle (12) and a target (60, 64, 66, 70, 86, 88, 92, 94, 96, 100, 102) the forward-looking sensor (18) generating a range rate signal corresponding to a rate that the distance between the host vehicle and the target (60, 64, 66, 70, 86, 88, 92, 94, 96, 100, 102) is changing and a controller (20) electrically coupled to the forward-looking sensor (18) and acquiring the target (60, 64, 66, 70, 86, 88, 92, 94, 96, 100, 102) wherein the controller (20) includes control logic operative to maintain a preset headway distance between the host vehicle and the target (60, 64, 66, 70, 86, 88, 92, 94, 96, 100, 102) by adjusting the host vehicle velocity in response to the range signal and the range rate signal, stopping the host vehicle (12) when the target (60, 64, 66, 70, 86, 88, 92, 94, 96, 100, 102) stops and the target (60, 64, 66, 70, 86, 88, 92, 94, 96, 100, 102) was acquired below a predetermined host vehicle velocity and activating a warning when the target (60, 64, 66, 70, 86, 88, 92, 94, 96, 100, 102) stops and the target (60, 64, 66, 70, 86, 88, 92, 94, 96, 100, 102) was acquired above the predetermined host vehicle velocity.

2. A system as claimed in claim 1 wherein the controller (20) is operable to provide a control signal to at least one of a braking system (14) and an engine management system (16) to maintain the preset headway distance.

3. A system as claimed in claim 1 or in claim 2 wherein the controller (20) is operable to maintain the headway distance from an initial vehicle rest velocity of zero KPH.

4. A system as claimed in any of claims 1 to 3 wherein the system further comprises an electric park brake assist (34) and the controller (20) is operable to apply the electric park brake assist (34) while maintaining a headway distance between the host vehicle (12) and the target (60, 64, 66, 70, 86, 88, 92, 94, 96, 100, 102).

5. A system as claimed in any of claims 1 to 4 wherein the target comprises at least one of a vehicle (60, 64, 66, 70, 86, 88, 92, 94, 96, 100), an object, and a pedestrian (102).

6. A system as claimed in any of claims 1 to 5 wherein the system further comprises an indicator (28) electrically coupled to the controller (20) operable to indicate at least one of an indication that the controller (20) is maintaining a vehicle velocity of zero KPH, an indication that the controller (20) is stopping the host vehicle (12) and an indication that the rate of deceleration is insufficient to stop behind the target (60, 64, 66, 70, 86, 88, 92, 94, 96, 100, 102).

7. A method of adjusting the velocity of a host vehicle (12) **characterised in that** the method comprises sensing a target (60, 64, 66, 70, 86, 88, 92, 94, 96, 100, 102) and generating a range signal corresponding to a distance between the host vehicle (12) and the target (60, 64, 66, 70, 86, 88, 92, 94, 96, 100, 102), generating a range rate signal corresponding to a rate the distance between the host vehicle (12) and the target (60, 64, 66, 70, 86, 88, 92, 94, 96, 100, 102) is changing, maintaining a preset headway distance between the host vehicle (12) and the target (60, 64, 66, 70, 86, 88, 92, 94, 96, 100, 102), in response to the range signal and the range rate signal, stopping the host vehicle (12) when the target (60, 64, 66, 70, 86, 88, 92, 94, 96, 100, 102) stops and the target (60, 64, 66, 70, 86, 88, 92, 94, 96, 100, 102) was acquired below a predetermined host vehicle velocity and activating a warning when the target (60, 64, 66, 70, 86, 88, 92, 94, 96, 100, 102) stops and the target (60, 64, 66, 70, 86, 88, 92, 94, 96, 100, 102) was acquired above the predetermined host vehicle velocity.

8. A method as in claim 7 wherein the method further comprises maintaining a headway distance between the host vehicle (12) and the target (60, 64, 66, 70, 86, 88, 92, 94, 96, 100, 102) from an initial vehicle rest velocity of zero KPH in response to the range signal and the range rate signal.

9. A method as in claim 7 or in claim 8 wherein the method further comprises stopping the host vehicle (12) when the target (60, 64, 66, 70, 86, 88, 92, 94, 96, 100, 102) stops and the target (60, 64, 66, 70, 86, 88, 92, 94, 96, 100, 102) did not exceed a predetermined velocity.

10. A motor vehicle (12) **characterised in that** the motor vehicle (12) has an adaptive cruise control system (10) as claimed in any of claims 1 to 6.

## Patentansprüche

1. Anpassungsfähiges Fahrtregelsystem (10) für ein Primärfahrzeug (12),
**dadurch gekennzeichnet, daß**
das System (10) einen vorwärtsschauenden Sensor (18) aufweist, welcher ein Abstandssignal erzeugt, das dem Abstand zwischen dem Primärfahrzeug (12) und einem Ziel (60, 64, 66, 70, 86, 88, 92, 94, 96, 100, 102) entspricht, wobei der vorwärtsschauende Sensor (18) ein Abstandsänderungssignal erzeugt, welches der Änderungsgeschwindigkeit des Abstandes zwischen dem Primärfahrzeug und dem Ziel (60, 64, 66, 70, 86, 88, 92, 94, 96, 100, 102) entspricht,
und eine Steuerung (20), welche elektrisch mit dem vorwärtsschauenden Sensor (18) verbunden ist und das Ziel (60, 64, 66, 70, 86, 88, 92, 94, 96, 100, 102) erfaßt,
worin die Steuerung (20) eine Steuerlogik enthält, die derart betreibbar ist, daß sie einen voreingestellten Front-Abstand zwischen dem Primärfahrzeug und dem Ziel (60, 64, 66, 70, 86, 88, 92, 94, 96, 100, 102) wahrt, indem sie die Geschwindigkeit des Primärfahrzeuges in Reaktion auf das Abstandssignal und das Abstandsänderungssignal anpaßt, das Primärfahrzeug (12) anhält, wenn das Ziel (60, 64, 66, 70, 86, 88, 92, 94, 96, 100, 102) stehenbleibt und das Ziel (60, 64, 66, 70, 86, 88, 92, 94, 96, 100, 102) unterhalb einer vorgegebenen Geschwindigkeit des Primärfahrzeuges erfaßt worden war, und eine Warnung aktiviert, wenn das Ziel (60, 64, 66, 70, 86, 88, 92, 94, 96, 100, 102) stehenbleibt und das Ziel (60, 64, 66, 70, 86, 88, 92, 94, 96, 100, 102) oberhalb einer vorgegebenen Primärfahrzeuggeschwindigkeit erfaßt worden war.

2. System nach Anspruch 1, worin die Steuerung (20) derart betreibbar ist, daß ein Steuersignal wenigstens an eine Bremsanlage (14) oder ein Motorverwaltungssystem (16) geliefert wird, um den voreingestellten Front-Abstand zu halten.

3. System nach Anspruch 1 oder Anspruch 2, worin die Steuerung (20) derart betreibbar ist, daß sie den Front-Abstand ausgehend von einer anfänglichen Fahrzeugstandgeschwindigkeit von null km/h hält.

4. System nach einem beliebigen der Ansprüche 1 bis 3, worin das System des weiteren einen elektrische Feststellbremsen-Hilfsantrieb (34) aufweist, und die Steuerung (20) derart betreibbar ist, daß der elektrische Feststellbremsen-Hilfsantrieb (34) angezogen wird, während ein Front-Abstand zwischen dem Primärfahrzeug (12) und dem Ziel (60, 64, 66, 70, 86, 88, 92, 94, 96, 100, 102) gehalten wird.

5. System nach einem beliebigen der Ansprüche 1 bis 4, worin das Ziel wenigstens eines der folgenden beinhaltet: ein Fahrzeug (60, 64, 66, 70, 86, 88, 92, 94, 96, 100), einen Gegenstand und einen Fußgänger (102).

6. System nach einem beliebigen der Ansprüche 1 bis 5, worin das System des weiteren eine Anzeige (28) beinhaltet, die elektrisch mit der Steuerung (20) gekoppelt und derart betreibbar ist, daß sie wenigstens eine der folgenden anzeigt: eine Anzeige, daß die Steuerung (20) eine Fahrzeuggeschwindigkeit von null km/h hält, eine Anzeige, daß die Steuerung (20) das Primärfahrzeug (12) anhält, und eine Anzeige, daß die Verzögerung nicht ausreichend ist, um hinter dem Ziel (60, 64, 66, 70, 86, 88, 92, 94, 96, 100, 102) anzuhalten.

7. Verfahren zur Anpassung der Geschwindigkeit eines Primärfahrzeuges (12), **dadurch gekennzeichnet, daß** das Verfahren folgendes beinhaltet: Erfassen eines Zieles (60, 64, 66, 70, 86, 88, 92, 94, 96, 100, 102) und Erzeugen eines Abstandssignals, welches einem Abstand zwischen dem Primärfahrzeug (12) und dem Ziel (60, 64, 66, 70, 86, 88, 92, 94, 96, 100, 102) entspricht, Erzeugen eines Abstandsänderungssignals, welches der Änderungsgeschwindigkeit des Abstandes zwischen dem Primärfahrzeug (12) und dem Ziel (60, 64, 66, 70, 86, 88, 92, 94, 96, 100, 102) entspricht, Wahren eines voreingestellten Front-Abstandes zwischen dem Primärfahrzeug (12) und dem Ziel (60, 64, 66, 70, 86, 88, 92, 94, 96, 100, 102) in Reaktion auf das Abstandssignal und das Abstandsänderungssignal, Anhalten des Primärfahrzeuges (12), wenn das Ziel (60, 64, 66, 70, 86, 88, 92, 94, 96, 100, 102) stehenbleibt, und das Ziel (60, 64, 66, 70, 86, 88, 92, 94, 96, 100, 102) unterhalb einer vorgegebenen Primärfahrzeuggeschwindigkeit erfaßt worden ist, und Aktivieren einer Warnung, wenn das Ziel (60, 64, 66, 70, 86, 88, 92, 94, 96, 100, 102) stehenbleibt, und das Ziel (60, 64, 66, 70, 86, 88, 92, 94, 96, 100, 102) oberhalb einer vorgegebenen Primärfahrzeuggeschwindigkeit erfaßt worden ist.

8. Verfahren nach Anspruch 7, worin das Verfahren des weiteren das Einhalten eines Front-Abstandes zwischen dem Primärfahrzeug (12) und dem Ziel (60, 64, 66, 70, 86, 88, 92, 94, 96, 100, 102) beinhaltet, ausgehend von einer anfänglichen Fahrzeugstandgeschwindigkeit von null km/h, in Reaktion auf das Abstandssignal und das Abstandsänderungssignal.

9. Verfahren nach Anspruch 7 oder Anspruch 8, worin das Verfahren des weiteren das Anhalten des Primärfahrzeuges (12) beinhaltet, wenn das Ziel (60, 64, 66, 70, 86, 88, 92, 94, 96, 100, 102) stehenbleibt, und das Ziel (60, 64, 66, 70, 86, 88, 92, 94, 96, 100, 102) eine vorgegebene Geschwindigkeit nicht überschritten hat.

10. Kraftfahrzeug (12), **dadurch gekennzeichnet, daß** das Kraftfahrzeug (12) ein anpassungsfähiges Fahrtregelsystem (10) nach einem beliebigen der Ansprüche 1 bis 6 aufweist.

## Revendications

1. Système de régulation de vitesse adaptatif (10) pour un véhicule hôte (12), **caractérisé en ce que** le système (10) comprend un capteur dirigé vers l'avant (18) produisant un signal de plage correspondant à une distance entre le véhicule hôte (12) et une cible (60, 64, 66, 70, 86, 88, 92, 94, 96, 100, 102), le capteur dirigé vers l'avant (18) produisant un signal de variation de plage correspondant à un taux de variation de la distance entre le véhicule hôte et la cible (60, 64, 66, 70, 86, 88, 92, 94, 96, 100, 102), et un régulateur (20) couplé électriquement au capteur dirigé vers l'avant (18) et acquérant des données de cible (60, 64, 66, 70, 86, 88, 92, 94, 96, 100, 102), sachant que le régulateur (20) comprend une logique de commande opérationnelle pour maintenir une distance préétablie entre le véhicule hôte et la cible (60, 64, 66, 70, 86, 88, 92, 94, 96, 100, 102) en ajustant la vitesse du véhicule hôte en réponse au signal de plage et au signal de variation de plage, en arrêtant le véhicule hôte (12) si la cible (60, 64, 66, 70, 86, 88, 92, 94, 96, 100, 102) s'arrête et si les données de cible (60, 64, 66, 70, 86, 88, 92, 94, 96, 100, 102) ont été acquises en dessous d'une vitesse prédéterminée du véhicule hôte, et en activant un avertissement si la cible (60, 64, 66, 70, 86, 88, 92, 94, 96, 100, 102) s'arrête et si les données de cible (60, 64, 66, 70, 86, 88, 92, 94, 96, 100, 102) ont été acquises au-dessus de la vitesse prédéterminée du véhicule hôte.

2. Système selon la revendication 1, **caractérisé en ce que** le régulateur (20) est opérationnel pour délivrer un signal de commande au moins à un système de freinage (14) et/ou à un système de gestion moteur (16) afin de maintenir la distance préétablie entre véhicules.

3. Système selon la revendication 1 ou 2, **caractérisé en ce que** le régulateur (20) est opérationnel pour maintenir la distance entre véhicules à partir d'une vitesse résiduelle initiale du véhicule de zéro km/h.

4. Système selon l'une quelconque des revendications 1 à 3, **caractérisé en ce que** le système comprend une assistance électrique (34) de frein de stationnement, et le régulateur (20) est opérationnel pour appliquer l'assistance électrique (34) de frein de stationnement tout en maintenant une distance entre le véhicule hôte (12) et la cible (60, 64, 66, 70, 86, 88, 92, 94, 96, 100, 102).

5. Système selon l'une quelconque des revendications 1 à 4, **caractérisé en ce que** la cible comprend au moins un véhicule (60, 64, 66, 70, 86, 88, 92, 94, 96, 100) et/ou un objet et/ou un piéton (102).

6. Système selon l'une quelconque des revendications 1 à 5, **caractérisé en ce que** le système comprend en outre un indicateur (28) couplé électriquement au régulateur (20) et opérationnel pour indiquer au moins que le régulateur (20) maintient une vitesse du véhicule de zéro km/h, et/ou que le régulateur (20) est en train d'arrêter le véhicule hôte (12), et/ou que la vitesse de décélération est insuffisante pour s'arrêter en arrière de la cible (60, 64, 66, 70, 86, 88, 92, 94, 96, 100, 102).

7. Procédé d'ajustement de la vitesse d'un véhicule hôte (12), **caractérisé en ce que** le procédé comprend la détection d'une cible (60, 64, 66, 70, 86, 88, 92, 94, 96, 100, 102) et la production d'un signal de plage correspondant à une distance entre le véhicule hôte (12) et la cible (60, 64, 66, 70, 86, 88, 92, 94, 96, 100, 102), la production d'un signal de variation de plage correspondant à un taux de variation de la distance entre le véhicule hôte (12) et la cible (60, 64, 66, 70, 86, 88, 92, 94, 96, 100, 102), le maintien d'une distance préétablie entre le véhicule hôte (12) et la cible (60, 64, 66, 70, 86, 88, 92, 94, 96, 100, 102), en réponse au signal de plage et au signal de variation de plage, l'arrêt du véhicule hôte (12) si la cible (60, 64, 66, 70, 86, 88, 92, 94, 96, 100, 102) s'arrête et si les données de cible (60, 64, 66, 70, 86, 88, 92, 94, 96, 100, 102) ont été acquises en dessous d'une vitesse prédéterminée du véhicule hôte, et l'activation d'un avertissement si la cible (60, 64, 66, 70, 86, 88, 92, 94, 96, 100, 102) s'arrête et si les données de cible (60, 64, 66, 70, 86, 88, 92, 94, 96, 100, 102) ont été acquises au-dessus de la vitesse prédéterminée du véhicule hôte.

8. Procédé selon la revendication 7, **caractérisé en ce que** le procédé comprend en outre le maintien d'une distance entre le véhicule hôte (12) et la cible (60, 64, 66, 70, 86, 88, 92, 94, 96, 100, 102) à partir d'une vitesse résiduelle initiale du véhicule de zéro km/h, en réponse au signal de plage et au signal de variation de plage.

9. Procédé selon la revendication 7 ou 8, **caractérisé en ce que** le procédé comprend en outre l'arrêt du véhicule hôte (12) si la cible (60, 64, 66, 70, 86, 88, 92, 94, 96, 100, 102) s'arrête et si la cible (60, 64, 66, 70, 86, 88, 92, 94, 96, 100, 102) n'a pas dépassé une vitesse prédéterminée.

10. Véhicule à moteur (12), **caractérisé en ce que** le véhicule à moteur (12) possède un système de régulation de vitesse adaptatif (10) selon l'une quelconque des revendications 1 à 6.
